# EUROPÄISCHE PATENTSCHRIFT

(11) **EP 2 118 911 B1**
(45) Veröffentlichungstag und Bekanntmachung des Hinweises auf die Patenterteilung: **15.01.2020**
(21) Anmeldenummer: 08708559.3
(22) Anmeldetag: 01.02.2008
(51) Int. Cl.: H01C 7/02, C09J 9/02, C09J 133/06, C09J 7/35, C09J 7/28

(54) **INTRINSISCH ERWÄRMBARE HEISSSCHMELZKLEBRIGE FLÄCHENGEBILDE**
INTRINSICALLY HEATABLE HOT MELT ADHESIVE SHEET MATERIALS
TISSUS THERMOFUSIBLES POUVANT ÊTRE CHAUFFÉS INTRINSÈQUEMENT

(30) Priorität: 13.02.2007 DE 102007007617
(43) Veröffentlichungstag der Anmeldung: 18.11.2009
(73) Patentinhaber: tesa SE, 22848 Norderstedt (DE)
(72) Erfinder: KEITE-TELGENBÜSCHER, Klaus, 22529 Hamburg (DE); HIRT, Christina, Würzburg 97084 (DE); FERNÁNDEZ-PASTOR, Jara, E-33204 Gijón Asturias (ES)
(86) Internationale Anmeldenummer: PCT/EP2008/051250
(87) Internationale Veröffentlichungsnummer: WO 2008/098847

(56) Entgegenhaltungen:
- WO-A-2004/081095
- WO-A-2004/081136
- DE-A1- 10 210 661
- US-A- 5 864 280

## Beschreibung

Die Erfindung betrifft Flächengebilde bestehend aus zumindest einer Schicht Heißschmelzkleber sowie deren Verwendung.

In der Automobilindustrie werden vermehrt elektrisch heizbare Außenspiegel eingesetzt. Auch sind Sitzheizungen immer mehr verbreitet. Um bei derartigen Anwendungen die gewünschte Beheizung zu erreichen, werden im einfachsten Fall Widerstandsdrähte planar verlegt. Die Heizleistung ist hierbei konstant und wird über einen externen Mechanismus gesteuert. In den letzten Jahren hat sich die Verwendung so genannter PTC-Elemente (PTC für "positive temperature coefficient") durchgesetzt.

Den PTC-Effekt weisen stromleitende Materialien auf, die bei tieferen Temperaturen den Strom besser leiten können als bei hohen. Derartige Materialien werden auch Kaltleiter genannt; die Materialien verhalten sich entsprechend kaltleitend.

So werden etwa für Automobilaußenspiegel beispielsweise mit Aluminium-Leiterbahnen kontaktiertierte PTC-Elemente verklebt. PTC-Elemente sind Elemente, die einem hohen Strom einen Widerstand entgegenstellen. Durch Anlegen einer bestimmten Stromstärke heizt sich das PTC-Element auf, und die Wärme wird über ein doppelseitiges Haftklebeband auf die Glasoberfläche des Spiegels übertragen. Durch den PTC-Effekt wird die erreichte Temperatur begrenzt, da mit zunehmender Temperatur der Widerstand des Heizelements steigt und somit der Stromfluss verringert wird. Auf diese Weise lassen sich Temperaturen von 45 bis 80 °C auf der Oberfläche erzielen. Als PTC-Materialien werden in der Regel rußgefüllte, teilkristalline Thermoplaste, z.B. Polyethylen, Polyvinylidenfluorid, Hexafluorpropylen oder Tetrafluorethylen, verwendet. Der Stand der Technik ist in DE 29 48 350 A1, EP 0 307 205 A1, EP 0 512 703 A1 sowie EP 0 852 801 A1 detailliert beschrieben. In der Verwendung als Spiegelheizung werden diese PTC-Materialien in Form einer Tinte auf ein Netzwerk von Leiterbahnen, die der Kontaktierung dienen, aufgedruckt. Das in der Tinte enthaltene Lösungmittel wird abgetrocknet. Solche Tinten werden in EP 0 435 923 A1 ausführlich beschrieben.

Zur Befestigung des PTC-Elements an der Spiegelplatte werden in der Regel Haftklebebänder eingesetzt. Neben einer möglichst hohen thermischen Leitfähigkeit werden an das die Wärme vom PTC-Element zur Spiegeloberfläche transportierende Haftklebeband noch besondere Anforderungen im Hinblick auf Wärmescherfestigkeit bei erhöhten Temperaturen, Witterungsbeständigkeit und Haftklebrigkeit bei tiefen Temperaturen gestellt.

Das bestehende Konzept funktioniert gut, erfordert aber einen relativ komplizierten Aufbau, da die PTC-Elemente nicht nur mit dem Glas des Spiegels verklebt werden müssen, sondern auch mit der Trägerplatte des Spiegels, die in vielen Fällen aus dem Kunststoff Acrylnitril/Butadien/Styrol (ABS) besteht. Die Verklebung dieser unterschiedlichen Materialien stellt ebenfalls besondere Anforderungen an das Klebeband.

Bekannt sind aus DE 103 10 722 A1, WO 2004081136 A und WO 2004/081095 auch haftklebrige Flächengebilde, welches intrinsisch erwärmbar sind ist und die Heizfunktion mit der Haftklebrigkeit verbinden. Nachteilig ist jedoch die stark abnehmende Haftklebrigkeit mit zunehmendem Anteil an die Erwärmung erzeugenden Komponenten in der Haftklebemasse sowie die Schwierigkeiten, mit den in der Regel amorphen haftklebrigen Polymeren einen ausreichenden PTC-Effekt zu erreichen. Heißschmelzende Klebmassen sind in diesen Schriften nicht genannt.

Auch die D3 beschreibt eine Schicht einer erwärmbaren Klebmasse, die einen PTC-Effekt zeigt. Auch hierbei handelt es sich um eine Haftklebemasse, nicht jedoch um eine Heißschmelzklebmasse.

Für eine Vereinfachung des Herstellprozesses von beheizbaren Spiegeln besteht somit der Bedarf für ein verbessertes erwärmbares, selbstregulierendes Klebeband, welches die Trägerplatte mit dem Spiegel verklebt und zudem z. B. durch elektrischen Strom oder einen anderen physikalischen Prozess in sich selbst Wärme erzeugt.

Gelöst wird die Aufgabe überraschend und für den Fachmann in nicht vorhersehbarer Weise durch ein Flächengebilde gemäß Patentanspruch 1, umfassend mindestens eine Schicht, innerhalb derer Wärme erzeugt werden kann, wobei diese Schicht heißschmelzklebrig und kaltleitend ist, also den PTC-Effekt aufweist.

Die Unteransprüche betreffen bevorzugte Weiterentwicklungen dieses Flächengebildes sowie dessen Verwendung.

Bevorzugt wird die Wärme innerhalb der heißschmelzklebrigen Schicht durch den elektrischen Widerstand erzeugt. Erfindungsgemäß können solche Flächengebilde einmalig oder mehrfach eingesetzt werden, ebenfalls kann der Wärmeerzeugungsprozess einmalig oder reproduzierbar durchführbar sein.

Die Wärmeerzeugung in der heißschmelzklebrigen Schicht wird durch den PTC-Effekt begrenzt, so dass die Schicht sich bezüglich der Wärmeentwicklung selbstregulierend verhält, insbesondere im Hinblick auf einen nicht zu überschreitenden Temperaturhöchstwert. Eine Überhitzung des Flächengebildes soll somit vermieden werden.

In einer einfachen Ausführungsform besteht das Flächengebilde aus einer singulären Lage einer wärmeerzeugenden Heißschmelzklebemasse, welche zum Beispiel Spiegel und Trägerplatte verbindet. Die für eine widerstandselektrische Erwärmung notwendige Kontaktierung ist dann in einem separaten Element, welches auch der Spiegel oder die Spiegelträgerplatte sein kann, untergebracht.

In einer zweiten, bevorzugten Ausführungsform ist die Kontaktierung integraler Bestandteil des Flächengebildes.

### Heißschmelzklebemassen

Ein wichtiger Bestandteil des erfindungsgemäßen Flächengebildes (Heißschmelzklebebands) ist die erwärmbare Heißschmelzklebemasse.

Heißschmelzklebrig im Sinne der vorliegenden Erfindung ist ein erfindungsgemäßes Flächengebilde, wenn nach der schmelzeförmigen Applikation auf den Haftgrund und anschließendem Abkühlen die Klebkraft bei Raumtemperatur nach ASTM D 3330-04 (bei einer Abzugsgeschwindigkeit von 300 mm/min auf dem zu verklebenden Haftgrund) größer ist als 1 N/cm, bevorzugt größer ist als 3 N/cm, besonders bevorzugt größer ist als 5 N/cm.

Vorteilhaft lassen sich solche Heißschmelzklebemassen einsetzen, welche
(a) mindestens eine Klebstoffkomponente und
(b) mindestes ein elektrisch leitfähiges Material ("Füllmaterial")
umfassen.

Im Falle einer somit elektrisch erwärmbaren Heißschmelzklebemasse ist der Zusatz mindestens eines elektrisch leitfähigen Füllmaterials, welches unter Strombeaufschlagung Wärme entwickelt, vorteilhaft. In einer bevorzugten Ausführungsform können Graphite oder Ruße eingesetzt werden. In einer weiter bevorzugten Ausführung ist dieser Füllstoff nanoskalig, d.h. er besitzt in mindestens einer Raumdimension eine Ausdehnung von nicht mehr als 500 nm, bevorzugt nicht mehr als 200 nm, besonders bevorzugt nicht mehr als 50 nm. In einer sehr bevorzugten Ausführungsform wird Leitruß (beispielsweise Printex® XE der Fa. Degussa) eingesetzt. In einer weiter sehr bevorzugten Ausführungsform werden Kohlenstoff-Nanoröhren (Carbon-Nanotubes; z.B. der Fa. Ahwahnee oder Carbon-Nanotube-Masterbatches der Fa. Hyperion Catalysis) und/oder Kohlenstoff-Nanofasern (Carbon-Nanofibres) eingesetzt. Vorteilhaft ist hierbei der geringe Anteil an Füllstoff, der für die Erwärmung benötigt wird, so dass die mechanischen Eigenschaften des Heißschmelzklebers nur wenig beeinflusst werden.

Die Ausprägung des Effektes der elektrischen Erwärmbarkeit der Heißschmelzklebemasse kann durch den Füllgrad, das heißt den Massenanteil, des Füllmaterials in der Heißschmelzklebemasse, bestimmt werden. Der Füllgrad beträgt vorteilhaft zwischen 1 und 60 Gew.-%. Sehr bevorzugt werden zwischen 5 und 50 Gew.-% Füllmaterial eingesetzt.

Die Leitfähigkeit und somit auch die erzielbare Temperatur und Aufheizrate ist unter anderem abhängig vom Füllgrad. Durch Anhebung des Füllgrades lassen sich höhere Leitfähigkeiten und gegebenenfalls auch höhere Temperaturen erreichen. Weiterhin ist die elektrische Leitfähigkeit und somit die Erwärmbarkeit der Heißschmelzklebemasse auch vom Basispolymer der Klebstoffkomponente abhängig.

Eine weitere Verbesserung des Trägermaterials kann durch die Zugabe von mindestens einem Füllstoff mit hoher Wärmekapazität, insbesondere mit einer Wärmekapazität von mehr als 0,7 J/gK, erreicht werden. Dies führt durch die Pufferfunktion zu einer Vergleichmäßigung des Aufheizverhaltens und einer verlängerten Abgabe von Wärme nach Beendigung des aktiven Wärmeerzeugungsprozesses. Füllstoffe mit hoher Wärmekapazität, die erfindungsgemäß vorteilhaft eingesetzt werden können, sind z.B. Aluminium, Beryllium, Bor, Calcium, Eisen, Graphit, Kalium, Kupfer, Magnesium, Phosphor oder Verbindungen der vorgenannten Stoffe, insbesondere Aluminiumoxid und -chlorid, Calciumcarbonat, Calciumclorid, Kupfersulfat, Magnetit, Haematit, Magnesiumcarbonat und -clorid, Phosphorchlorid, Phosphoroxid.

Als Klebstoffkomponente der elektrisch beheizbaren Heißschmelzklebemassen können hervorragend alle Polymere mit geeigneten heißschmelzklebenden Eigenschaften eingesetzt werden, die zusammen mit dem elektrisch leitenden Fülllmaterial einen PTC-Effekt aufweisen, sich also kaltleitend verhalten. Bevorzugt werden mehrphasige Systeme verwendet, insbesondere solche, bei denen zumindest eine Phase im Temperatur-Bereich des Auftretens des PTC-Effekts durch die Erwärmung eine Volumenausdehnung erfährt, die nach allgemein anerkannter wissenschaftlicher Erklärung zumindest teilweise den PTC-Effekt verursacht (s. J. Meyer in Polymer Engineering and Science, 13 (1973), S. 462 - 468). Mehrphasig im Sinne der Erfindung sind dabei auch mit einem weiteren Füllstoff gefüllte Polymere bzw. Polymerblends.

Besonders bevorzugt werden teilkristalline Polymere oder Block-Copolymere eingesetzt. Als teilkristalline Systeme können sowohl einphasige als auch mehrphasige Systeme eingesetzt werden. Bevorzugt enthält die Heißschmelzklebemasse mindestens 30 Gew.-% teilkristalliner Polymere, noch besser ist ein Anteil an teilkristallinen Polymeren von mindestens 50 Gew.-% in der Heißschmelzklebemasse. Es hat sich herausgestellt, dass die Eignung zur Erzielung des PTC-Effektes sich mit dem Anteil an teilkristallinen Systemen - verglichen mit Haftklebemassen, die mit zunehmendem teilkristallinen Anteil ihre haftklebrigen Eigenschaften verlieren und daher nur geringere Anteile an teilkristallinen Systemen aufweisen - überraschend stark verbessert. Heißschmelzklebemassen sind daher für die Anwendung des PTC-Effektes über die Erwartungen hinaus gut geeignet.

Als im erfinderischen Sinne besonders vorteilhaft haben sich teilkristalline Polymere oder Block-Copolymere herausgestellt, die zu 100 % in der Klebemasse enthalten sind oder die nahezu zu 100 % in der Klebemasse enthalten sind.

Insbesondere bevorzugt sind werden solche teilkristallinen Polymere eingesetzt, bei denen der Kristallinitätsgrad, welcher mit der Differential-Scannig-Calorimetry (DSC) ermittelt wird, bevorzugt mehr als 20 %, besonders bevorzugt mehr als 40 % beträgt.

Ganz besonders bevorzugt werden im Bereich der teilkristallinen Thermoplaste Polyolefine (z.B. Polyethylen niedriger Dichte) oder Copolymere von Polyolefinen (z.B. Ethylen-Vinylacetat (EVA), Ethylen-Acrylsäure (EAA), Ethylen-Methacrylsäure (EMAA), Ethylen-Ethylacrylat, Ethylen-Butylacrylat), lonomere, Polyamide und/oder deren Copolymere eingesetzt. Diese weisen neben ausreichendem PTC-Effekt auch besonders gute Heißschmelzklebeeigenschaften auf.

Weiterhin bevorzugt werden im Bereich der teilkristallinen Thermoplaste säuremodifizierte (z.B. mit Maleinsäure oder Maleinsäureanhydrid) Polyolefine oder deren Copolymere, da diese besonders gut mit den leitfähigen Füllstoffen (z.B. Ruß oder Kohlenstoffnanoröhrchen) verträglich sind und somit leichter homogene Dispersionen des Füllstoffs in der Polymermatrix hergestellt werden können.

Ganz besonders bevorzugt werden als Block-Copolymere Styrol-Block-Copolymere, wie z.B SBS (Styrol/Butadien/Styrol-Blockcopolymere), SIS (Styrol/Isopren/Styrol-Blockcopolymere), SEBS (Styrol-Ethlyen-Butylen-Styrol-Blockcopolymere) oder SEPS (Styrol-Ethylen-Propylen-Styrol-Blockcopolymere) eingesetzt.

Zur Optimierung der klebtechnischen Eigenschaften können den erfinderischen Heißschmelzklebemassen vorteilhaft Harze beigemischt werden. Als zuzusetzende klebrigmachende Harze sind ausnahmslos alle vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C₅- bis C₉- sowie andere Kohlenwasserstoffharze. Beliebige Kombinationen dieser und weiterer Harze können eingesetzt werden, um die Eigenschaften der resultierenden Klebmasse wunschgemäß einzustellen. Im Allgemeinen lassen sich alle mit dem entsprechenden Thermoplast kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. In einer bevorzugten Auslegung werden Harze eingesetzt, die die elektrische Leitfähigkeit und die Erwärmbarkeit - auch über einen längeren Zeitraum - nicht vermindern.

Bevorzugt werden die für die erfinderischen Flächengebilde eingesetzten Heißschmelzklebemassen vernetzt, wobei hohe Vernetzungsgrade angestrebt werden, die insbesondere auch den PTC-Effekt unterstützen (s. EP 0 311 142 A1 oder US 4 775 778 A). Eine Vernetzung beseitigt oder vermindert auch den NTC-Effekt (Negative Temperature Coefficient), der bei Temperaturen oberhalb des Schmelzpunktes der Klebemasse beobachtet wird. Nach einer bevorzugten Ausgestaltung der Erfindung weist die mindestens eine Klebstoffkomponente bevorzugt einen Vernetzungsgrad auf, der mindestens einem Gelwert von 35 %, insbesondere von mindestens 60 % entspricht. Dabei wird als Gelwert das Verhältnis von in einem geeignenten Lösungsmittel (z.B. Toluol oder Xylol) nicht löslicher Klebstoffkomponente zur Summe aus löslicher und nichtlöslicher Komponente definiert. In einer bevorzugten Vorgehensweise werden die Heißschmelzklebemassen mit Elektronenstrahlen vernetzt. Typische Bestrahlungsvorrichtungen, die zum Einsatz kommen können, sind Linearkathodensysteme, Scannersysteme bzw. Segmentkathodensysteme, sofern es sich hierbei um Elektronenstrahlbeschleuniger handelt. Eine ausführliche Beschreibung des Standes der Technik und die wichtigsten Verfahrensparameter findet man bei Skelhorne, Electron Beam Processing, in Chemistry and Technology of UV and EB formulation for Coatings, Inks and Paints, Vol. 1, 1991, SITA, London. Typische Beschleunigungsspannungen liegen im Bereich zwischen 50 und 500 kV, vorzugsweise im Bereich zwischen 80 und 300 kV. Die angewandten Streudosen bewegen sich zwischen 5 bis 150 kGy, insbesondere zwischen 20 und 100 kGy. Es können auch andere Verfahren eingesetzt werden, die hochenergetische Bestrahlung ermöglichen.

Weiterhin ist Bestandteil der Erfindung das Verfahren, bei welchem eine Variation der elektrischen Leitfähigkeit und somit der thermischen Erwärmung über den Vernetzungsgrad bewirkt wird. Durch Erhöhung der ES-Dosis (und damit auch des Vernetzungsgrades) lässt sich die elektrische Leitfähigkeit erhöhen und bei gleichem Strom erhöht sich die Temperatur der Heißschmelzklebemasse. Ebenso lässt sich über den Vernetzungsgrad der PTC-Effekt einstellen.

Zur Verringerung der erforderlichen Dosis können der Heißschmelzklebemasse Vernetzer und/oder Promotoren zur Vernetzung beigemischt werden, insbesondere durch Elektronenstrahlen oder thermisch anregbare Vernetzer und/oder Promotoren. Geeignete Vernetzer für die Elektronenstrahlvernetzung sind z.B. bi- oder multifunktionelle Acrylate oder Methacrylate, aber auch Triallylcyanurate und -isocyanurate. In einer weiteren bevorzugten Auslegung werden die Heißschmelzklebemassen mit thermisch aktivierbaren Vernetzern vernetzt. Hierzu werden bevorzugt bi- oder multifunktionelle Epoxide, bi- oder multifunktionelle Hydroxide sowie bi- oder multifunktionelle Isocyanate oder Silane beigemischt.

Weiterhin können der Heißschmelzklebemasse vorteilhaft Weichmacher (Plastifizierungsmittel) zur Verbesserung der Klebfähigkeit zugesetzt sein.

Vorteilhaft ist auch der Zusatz polymerer oder anorganischer Füllstoffe, die mit ihrem Aufschmelzen während der Erwärmung den PTC-Effekt unterstützen. Dies können z. B. hochkristalline Polyolefinwachse oder Ionische Flüssigkeiten (niedrigschmelzende Metallsalze) sein. Durch die Wahl des Schmelzpunktes der Füllstoffe kann zudem die Temperatur, bei der der PTC-Effekt auftritt, eingestellt werden.

### Herstellverfahren für die Heißschmelzklebemassen

Die elektrisch leitfähigen Füllmaterialien können den Monomeren vor der Polymerisation und/oder während der Polymerisation und/oder den Polymeren nach Beendigung der Polymerisation beigemischt werden. Vorzugsweise wird das Füllmaterial nach der Polymerisation zu einer Schmelze der mindestens einen Klebstoffkomponente kompoundiert.

Für die Beschichtung aus der Schmelze als Hotmelt-System wird bevorzugt das elektrisch leitfähige Füllmaterial zu der Schmelze kompoundiert. Hierbei ist eine homogene Einarbeitung im erfindungsgemäßen Sinne wünschenswert. Homogene Verteilungen des Füllmaterials in der Heißschmelzklebemasse werden bevorzugt durch Kompoundierung in Doppelschneckenextrudern oder Planetwalzenextrudern erreicht. Vorteil dieses Prozesses ist die nur sehr kurzfristige Kontaminierung des Herstellprozesses mit dem Füllmaterial sowie die Vermeidung von Lösemitteln.

### Herstellung von Heißschmelzklebebändern

Das erfindungsgemäße Flächengebilde kann mit den geläufigen Verfahren zur Herstellung polymerer Folien nach dem Stand der Technik hergestellt werden. Dazu zählen z.B. die Flachfolienextrusion, die Blasfolienextrusion, das Kalanderverfahren, die Beschichtung aus einer Lösung oder einer monomeren oder einer präpolymeren Vorstufe des Polymeren.

Das Flächengebilde kann vorteilhaft eine Dicke bis 1000 µm aufweisen. Gemäß einer besonders vorteilhaften Ausführungsform der Erfindung beträgt diese 10 bis 400 µm, ganz besonders 30 bis 200 µm.

Durch den Herstellprozess eingebrachte Orientierungen innerhalb des Polymers (insbesondere die Einbringung anisotroper Eigenschaften bezüglich physikalischer Eigenschaften und/oder bezüglich der Ausrichtung der Makromoleküle) können den PTC-Effekt unterstützen.

Eine vorteilhafte Ausführung der Erfindung betrifft erfindungsgemäße Flächengebilde, insbesondere wie sie in den vorstehenden Textpassagen dargelegt sind, (besonders vorteilhaft in Form elektrisch erwärmbarer Heißschmelzklebebänder), die einen Film einer erwärmbaren Heißschmelzklebemasse und eine elektrisch leitfähige Kontaktierung umfassen.

Vorteilhaft geeignete Kontaktierungen sind Metallfolien, Metallnetze oder metallbeschichtete Kunststofffolien, Papiere oder Vliese.

In einem einfachen Fall wird die erwärmbare Heißschmelzklebemasse mit einem elektrisch leitfähigen Metall kontaktiert. In bevorzugter Weise werden Metalle eingesetzt, die nicht oder nur wenig über längere Zeiträume korrodieren. In sehr bevorzugten Ausführungen wird beispielsweise Kupfer oder Aluminium eingesetzt, wobei aber auch Silber- oder Gold-Kontaktierungen vorgenommen werden können. Dabei kann das Metall z.B. durch galvanische oder Bedampfungsverfahren direkt auf der Heißschmelzklebemasse abgeschieden werden oder in Form einer kontinuierlichen oder durchbrochenen Schicht aufkaschiert werden. Auch die Verwendung eines Leitlacks oder einer leitfähigen Tinte oder Druckfarbe ist möglich.

Die Figuren 1 bis 7 zeigen beispielhaft typische Produktaufbauten der erfindungsgemäßen Flächengebilde.
- Figur 1:: Kontaktierung über AI-Folie
- Figur 2:: Kontaktierung über AI-Folie und Metallnetz
- Figur 3:: Kontaktierung über metallisierte Folie
- Figur 4:: Ganzflächig kontaktierte Heißschmelzklebemasse: (a) Querschnitt, (b) Aufsicht
- Figur 5:: Einseitig mit einer Kammstruktur kontaktierte Klebemasse: (a) Querschnitt, (b) Aufsicht
- Figur 6:: erfindungsgemäßes mehrschichtiges Flächengebilde
- Figur 7:: erfindungsgemäßes Flächengebilde mit zweilagigem Aufbau der erwärmbaren Heißschmelzklebemasse und flächiger Kontaktierung

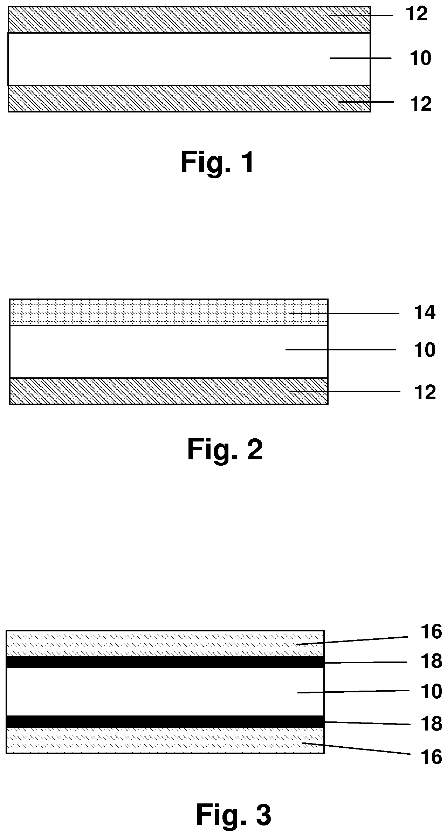

Mögliche Anordnungen solcher kontaktierter Heißschmelzklebebänder sind in den Figuren 1 bis 5 dargestellt. Gemäß Figur 1 ist die elektrisch erwärmbare Heißschmelzklebemasse 10 beidseitig und vollflächig mit einer Metallfolie 12, insbesondere einer Aluminium- oder Kupferfolie, kontaktiert. Nach Figur 2 ist die Heißschmelzklebemasse 10 auf einer Seite ebenfalls vollflächig mit einer Metallfolie 12 kontaktiert und auf der anderen Seite teilflächig mit einem Metallnetz 14. Schließlich zeigt Figur 3 einen Produktaufbau, in dem die Heißschmelzklebemasse 10 auf beiden Seiten mit einer metallisierten Kunststofffolie kontaktiert ist, wobei mit 16 jeweils die Kunststofffolie und mit 18 ihre Metallbeschichtung bezeichnet ist.

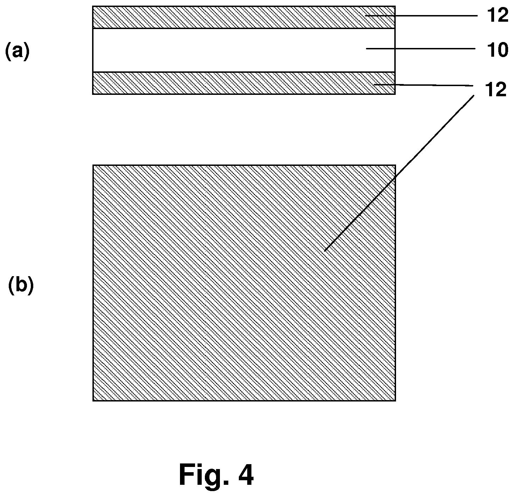

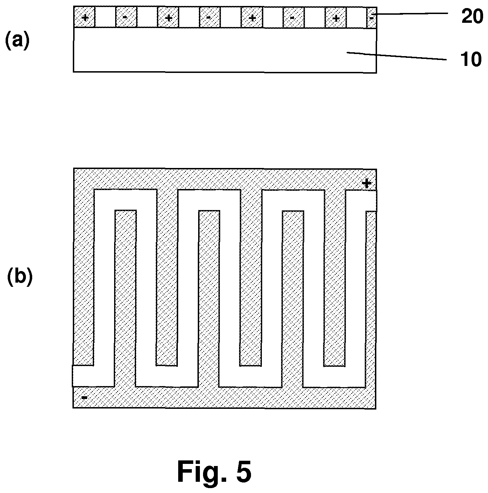

Die Kontaktierungen können sich beidseitig ganzflächig über die gesamte Klebebandoberfläche erstrecken oder die Oberfläche ein oder beidseitig nur partiell, insbesondere in Form von Linien, Punkten, Rastern, Kämmen oder anderen geometrischen Formen, abdecken. Im ersteren Fall ergibt sich ein Stromfluss quer zur Flächenausdehnung der erwärmbaren Heißschmelzklebemasse (z-Richtung), während sich im zweiten Fall ausschließlich oder zusätzlich ein Stromfluss innerhalb der Flächenausdehnung der erwärmbaren Heißschmelzklebemasse ergibt (x-y-Richtung). Die Figuren 4 und 5 verdeutlichen beispielhaft und ohne die Erfindung unnötig einschränken zu wollen solche Ausführungen.

Es bedeuten: 10 = erwärmbare Heißschmelzklebemasse, 12 = Metallfolie, 20 = Elektrodenstruktur

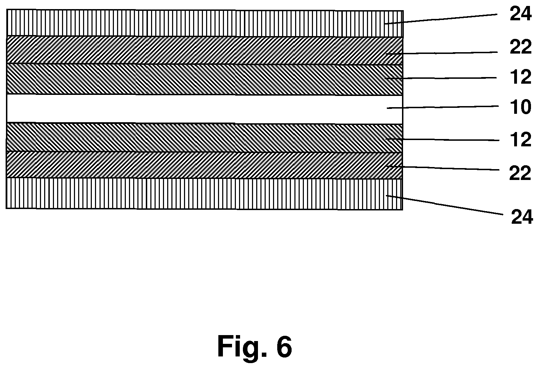

Weitere vorteilhafte Produktgestaltungen sind realisierbar. Ein besonders vorteilhafter Aufbau des Trägermaterials umfasst neben der erwärmbaren Heißschmelzklebemasse noch weitere Heißschmelzkleber- und/oder Haftkleberschichten und Kontaktierungsschichten sowie abdeckende Materialien (vgl. ein Beispiel eines solchen Flächengebildes in Figur 6; es bedeuten: 10 = erwärmbare Heißschmelzklebemasse, 12 = Metallfolie, 22 = Haftklebemasse, 24 = silikonisierte PET-Folie).

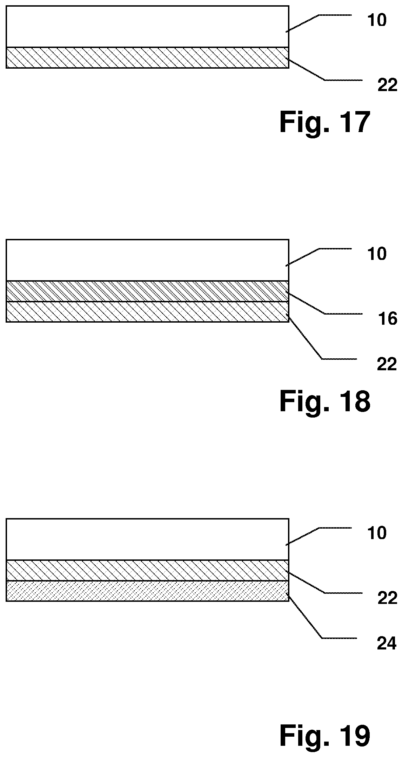

In einer vorteilhaften Ausführung umfasst das erfindungsgemäße heißschmelzklebrige Flächengebilde eine Schicht einer Haftklebemasse. Diese kann aus Lösung, Dispersion oder Schmelze auf das erfindungsgemäße heißschmelzklebrige Flächengebilde aufgebracht oder zukaschiert werden. Letzteres fungiert dann als Trägermaterial für die Haftklebemasse, so dass sich ein Haftklebeband ergibt, welches einseitig haftklebrig und anderseitig heißschmelzklebrig ist, aber vorteilhafterweise auf ein separates Trägermaterial (wie z.B. in EP 1111021 B1 dargestellt) verzichtet. Den Aufbau eines solchen vorteilhaften Klebebands mit einer Haftklebemasseschicht zeigt Figur 17.

Ausführungsformen des erfindungsgemäßen Flächengebildes können auch mit einem separaten Trägermaterial verwirklich sein. In diesem Fall ist es besonders vorteilhaft, wenn das Trägermaterial eine hohe Wärmeleitfähigkeit aufweist, insbesondere von mindestens 0,5 W/m•K, ganz besonders bevorzugt von mehr als 1 W/m•K. Besonders bevorzugte Materialien sind mit wärmeleitfähigen Füllstoffen, wie z.B. Bornitrid oder Aluminiumoxid, gefüllte Polymere. Den Aufbau eines solchen vorteilhaften Klebebands mit einem Trägermaterial zeigt Figur 18.

Als Haftklebemassen können alle dem Fachmann bekannten Massen verwendet werden, vorteilhafterweise solche auf Basis von Acrylsäure und/oder Methacrylsäure und/oder auf Basis von Estern der vorgenannten Verbindungen oder eine solche auf Basis von hydrierten Natur- oder Synthesekautschuken, da diese besonders alterungsstabil sind und somit wiederholten Heizprozessen des erfindungsgemäßen Flächengebildes langzeitig standhalten.

Besonders vorteilhaft werden Haftklebemassen eingesetzt, die selbst eine hohe Wärmeleitfähigkeit aufweisen, insbesondere von mindestens 0,5 W/m•K, ganz besonders bevorzugt von mehr als 1 W/m•K. Besonders bevorzugte Materialien sind mit wärmeleitfähigen Füllstoffen, wie z.B. Bornitrid oder Aluminiumoxid, gefüllte Haftklebemassen.

Zusätzlich kann die Haftklebemasse mit einem trennenden Abdeckmaterial eingedeckt werden. Als Abdeckmaterial eignen sich z. B. alle silikonisierten oder fluorierten Folien mit einer Releasewirkung. Als Folienmaterialien seien hier nur beispielhaft PP (Polypropylen), BOPP (biaxial orientiertes PP), MOPP (monoaxial orientiertes PP), PET (Polyethylenterephthalat), PVC (Polyvinylchlorid), PUR (Polyurethan), PE (Polyeethylen), PE/EVA (Polyethylen/Ethylenvinylacetat-Copolymere) und EPDM (Ethen/Propylen-Dien-Terpolymere) genannt. Weiterhin lassen sich auch Trennpapiere (Glassine Papiere, Kraft Papiere, polyolefinisch beschichtete Papiere) einsetzen. Den Aufbau eines solchen vorteilhaften Klebebands mit einem Abdeckmaterial zeigt Figur 19.

Besonders vorteilhaft werden Abdeckmaterialien eingesetzt, die selbst eine hohe Wärmeleitfähigkeit aufweisen, insbesondere von mindestens 0,5 W/m•K, ganz besonders bevorzugt von mehr als 1 W/m•K. Besonders bevorzugte Materialien sind mit wärmeleitfähigen Füllstoffen, wie z.B. Bornitrid oder Aluminiumoxid, gefüllte Polymere.

Durch besonders wärmeleitfähige Haftklebemassen, Träger- und/oder Abdeckmaterialien kann die zum Aufschmelzen des Heißschmelzklebers erforderliche Energie besser eingebracht werden, was z.B. zu verkürzten Zykluszeiten bei der Applikation führt.

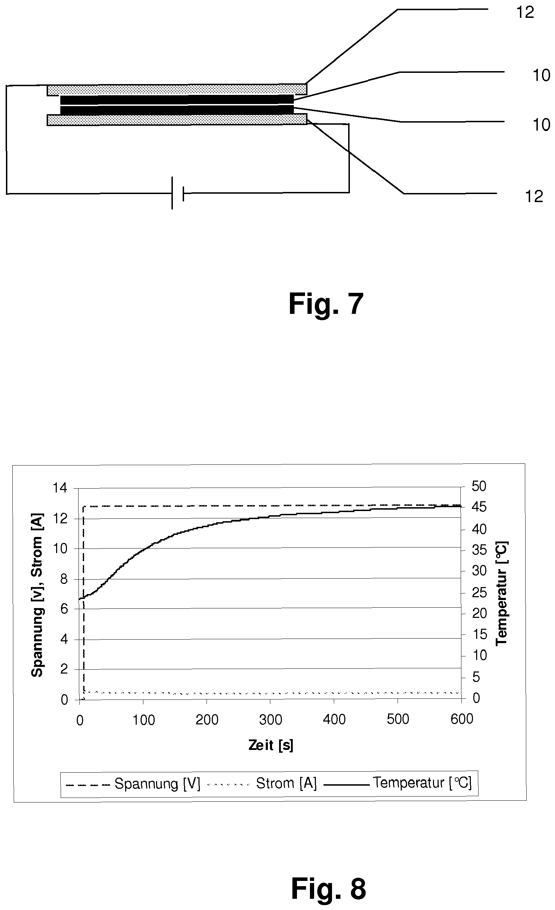

In einer bevorzugten Ausführungsform wird die heißschmelzklebrige erwärmbare Schicht aus mehreren Lagen desselben oder ähnlicher Materialien aufgebaut. Insbesondere im Fall der Erwärmung durch elektrischen Widerstand in z-Richtung werden so mögliche Kurzschlüsse durch Füllstoffagglomerate vermieden. In Figur 7 ist ein solcher Aufbau mit zweilagiger erwärmbarer Heißschmelzklebemasse dargestellt. Die Lagen können durch Heißsiegeln dauerhaft miteinander verbunden werden.
Es bedeuten: 10 = erwärmbare Heißschmelzklebemasse, 12 = Metallfolie

In einer weiteren vorteilhaften Ausführung ist das erwärmbare Flächengebilde mit einem Mechanismus ausgestattet, der bei erstmaliger Erwärmung des Flächengebildes zu einer Kohäsionserhöhung der heißschmelzklebrigen erwärmbaren Schicht und/oder einer weiteren Heißschmelzkleber- oder Haftkleberschicht führt. Dies könnte beispielsweise eine Erhöhung der Vernetzungsdichte durch eine thermisch initiierte Nachvernetzung, die insbesondere durch die Erwärmung des Flächengebildes selbst initiiert wird, sein. Vorteilhafterweise wird eine solches Flächengebilde derart verwendet, dass zunächst die Verklebung mit mindestens einem Substrat hergestellt wird, sodann die erstmalige Erwärmung vorgenommen wird und sich damit eine Verfestigung der Verklebung einstellt.

Das erfindungsgemäße Flächengebilde weist eine hohe Erwärmungsleistung auf und eignet sich zur Verwendung als Heißschmelzklebeband, das neben einer Verklebungsauch eine Beheizungsfunktion erfüllt, etwa für die Verklebung von beheizbaren Spiegeln.

Entsprechend betrifft die Erfindung die Verwendung der vorgenannt beschriebenen Flächengebilde zur Verklebung von Substraten in der Automobilindustrie, weiterhin auch die Verwendung zur Beheizung von mit derartigen Flächengebilden verklebten Substraten, insbesondere in der Automobilindustrie.

Bei einer vorteilhaften Verwendung der erfindungsgemäßen Flächengebilde wird die Beheizung des Substrates durch Erwärmung des Flächengebildes hervorgerufen, wobei das Flächengebilde auf mindestens einen Untergrund appliziert ist, der mit mindestens einem elektrischen Kontakt ausgerüstet ist, wobei insbesondere der Untergrund eines der verklebten Substrate selbst ist (aber nicht sein muss).

Letztere Verwendung eignet sich insbesondere auch für solche Ausführungsformen der erfindungsgemäßen Flächengebilde, bei denen ein elektrischer Kontakt nicht in das Flächengebilde selbst integriert ist.

### Experimente

Die Erfindung wird im Folgenden durch Experimente beschrieben, ohne sich durch die Wahl der untersuchten Proben unnötig beschränken zu wollen.

Folgende Testmethoden wurden angewendet.

### T-Schälkrafttest(Test A)

Zur Bestimmung der Klebkraft der Trägermaterialien wurde ein 200 µm dicker Streifen des erfindungsgemäßen Flächengebildes auf eine unbehandelte Polyesterfolie (Mitsubishi Hostaphan) mittels einer Heizpresse unter Vakuum bei einer Temperatur von 140 °C gesiegelt. Daraus wurde ein 20 mm breiter Streifen geschnitten, und nach 24 h Konditionierung im Raumklima wurde die Heizfolie wieder vom Polyesterträger abgezogen und die Kraft gemessen. Dabei wurden weder Heizfolie noch Polyesterfolie gestützt oder fixiert, so dass sich ein T-förmiges Abschälen einstellte. Die Messergebnisse sind in N/cm angegeben und sind gemittelt aus drei Messungen. Alle Messungen wurden bei Raumtemperatur unter klimatisierten Bedingungen durchgeführt.

### Messung der Erwärmbarkeit und des PTC-Effekts (Test B)

Zur Ermittlung der elektrischen Erwärmbarkeit des Materials wurde die Temperaturerhöhung nach elektrischer Spannungsbeaufschlagung gemessen. Die Messung der Temperatur erfolgte mit einem Pt100-Thermofühler. Zur Kontaktierung wurde gemäß Figur 1 ein 200 µm dicker Film der erwärmbaren Heißschmelzklebemasse doppelseitig mit jeweils einer 40 x 80 mm² großen und 50 µm dicken Kupfer-Folie versehen (heißlaminiert) und über diese Elektroden eine Gleichspannung von 12.8 Volt über einen Transformator angelegt. Die obere Seite war positiv, die untere Seite negativ geladen. Die Temperatur wurde nach 600 Sekunden direkt auf der Oberfläche der Kupferfolie gemessen und in °C angegeben.

Zur Ermittlung des PTC-Effekts wurde an den gleichen Testmustern weiterhin die Temperaturerhöhung nach Strombeaufschlagung im zeitlichen Verlauf aufgezeichnet. Die Messung der Temperatur erfolgte wie oben. Weiterhin wurden Strom und Spannung im zeitlichen Verlauf aufgezeichnet, so dass die Widerstandsänderung berechnet werden konnte.

### Messung der Erwärmbarkeit und des PTC-Effekts (Test C)

Das heißschmelzklebrige erwärmbare Trägermaterial wurde mit einer kammförmigen Leiterstruktur, welche sich auf einem PET-Trägermaterial befand, analog Figur 5 auf der einen Seite kontaktiert (heißlaminiert) und auf der anderen Seite mittels eines 75 µm dicken Haftkleberfilms (harzmodifizierte Acrylat-Haftklebemasse) auf eine Glasplatte appliziert. Die Fläche der Elektrode betrug 180 cm². Über diese flexible Leiterplatte wurde eine Gleichspannung von 12.8 Volt über einen Transformator angelegt. Die Temperatur wurde nach 600 Sekunden direkt auf der Oberfläche der Kupferfolie gemessen und in °C angegeben.

Zur Ermittlung des PTC-Effekts wurde an den gleichen Testmustern weiterhin die Temperaturerhöhung nach Strombeaufschlagung im zeitlichen Verlauf aufgezeichnet. Die Messung der Temperatur erfolgte wie oben. Weiterhin wurden Strom und Spannung im zeitlichen Verlauf aufgezeichnet, so dass die Widerstandsänderung berechnet werden konnte.

### Herstellung der Proben

Zunächst wurden in die die ausgewählten Thermoplaste mittels eines Messkneters vom Typ Haake Rheomix mit den leitfähigen Füllstoffen compoundiert. Dabei wurde eine Temperatur von 140 °C, eine Drehzahl von 120 min⁻¹ über eine Zeit von 45 min verwendet.

Aus den Polymercompounds wurde mittels einer Vakuumpresse Flächengebilde mit einer Dicke von 200 µm hergestellt.

Folgende Muster wurden hergestellt:

**Tabelle 1: Hergestellte Abmischungen der Trägermaterialien**

| Beispiel-Nr. | Polymer | Polymertyp | Füllstofftyp | Anteil Füllstoff [Gew.-%] |
|---|---|---|---|---|
| 1 | ExxonMobil Escorene Ultra FL 00014 | EVA, 14 % VA | Ruß Degussa Printex XE2 | 10 |
| 2 | ExxonMobil Escorene Ultra FL 00014 | EVA | Hyperion Catalysis MB 2525-00 (EVA Masterbatch mit 25 % Carbon Nanotubes) | 20 |
| 3 | ExxonMobil Escorene Ultra FL 00014 | EVA 14 % VA | Graphit Timcal Timrex KS6 | 36 |
| 4 | ExxonMobil Escorene Ultra FL 00014 | EVA, 14 % VA | Ruß Degussa Printex XE2 | 15 |
| 5 | ExxonMobil Escorene Ultra FL 00014 | EVA 14 % VA | Graphit Timcal Timrex KS6 | 45 |
| 6 | Dow Primacor 3460 | EAA | Ruß Printex XE2 | 16 |
| Gegenbeispiele | | | | |
| 7 | Basell Hostalen HS GC 7260 F2 | HDPE | Ruß Printex XE2 | 12 |
| 8 | ExxonMobil HTA 108 | HDPE | Ruß Printex XE2 | 11 |
| 9 | Haftklebemasse nach dem Beispiel "Klebstoffkomponente 1" aus WO 2004/081136 A1, (vgl. Seite 20, Zeilen 3 bis 17) | Polyacrylat | Graphit Timcal Timrex KS6 | 40 |

| | | | | |
|---|---|---|---|---|
| EVA: Ethylen-Vinylacetat-Copolymer EAA: Ethylen-Acrylsäure-Copolymer HDPE: Niederdruck-Polyethylen ("high density polyethylene") | | | | |

Der für Beispiel 9 hergestellten Haftklebemasse wurde das Lösemittel entzogen. Die weitere Herstellung des Musters erfolgte wie oben beschrieben. Dieses Muster wurde anschließend gemäß Beispiel 1 aus WO 2004/081136 durch Elektronenbestrahlung vernetzt. Die Dosis betrug dabei 50 kGy bei einer Beschleunigungsspannung von 220 kV.

### Resultate

Zur Ermittlung der Heißsiegelfestigkeit wurden die Beispiele 1 -5 dem Test A unterzogen. Der Test konnte nicht mit den Beispielen 6 und 8 durchgeführt werden, da diese keine Heißsiegelfähigkeit aufwiesen und somit nicht an der Polyesterfolie hafteten. Diese Gegenbeispiele zeigen, dass das für elektrische Schaltelemente mit PTC-Effekt (Thermoschalter) üblicherweise verwendete HDPE keine erfindungsgemäßen Eigenschaften aufweist. Diese Muster konnten daher auch nicht in die folgenden Tests einbezogen werden. Die Messwerte sind in Tabelle 2 zusammengefasst.

**Tabelle 2: Schälkräfte nach Test A**

| **Beispiel** | **Peelkraft in [N/cm]** |
|---|---|
| 1 | 3.5 |
| 2 | 4.0 |
| 3 | 2.2 |
| 4 | 3.1 |
| 5 | 1.6 |
| 6 | >10 (Folie gerissen) |

Die in Tabelle 2 aufgezeigten Werte verdeutlichen, dass die Beispiele 1 bis 6 gute heißschmelzklebrige Eigenschaften aufweisen. Durch die Mengen und Art des Füllmaterialzusatzes sowie durch die Monomer/Comonomer-Zusammensetzung lässt sich die Klebkraft steuern. Durch hohe Anteile des Füllmaterials sinkt die Klebkraft ab.

Zur Ermittlung der Erwärmbarkeit und des PTC-Effekts wurde Test B durchgeführt. Da hier die Leitung in z-Richtung durch das 200 µm dicke Flächengebilde hindurch erfolgte, reichte ein niedriger Füllstoffgehalt aus, um ausreichende Leitfähigkeit herzustellen, so dass nur Muster 1 bis 3 getestet wurden. Bei den anderen Mustern war die Leitfähigkeit zu groß, so dass die Spannung aufgrund der Strombegrenzung der Netzteile heruntergeregelt wurde.

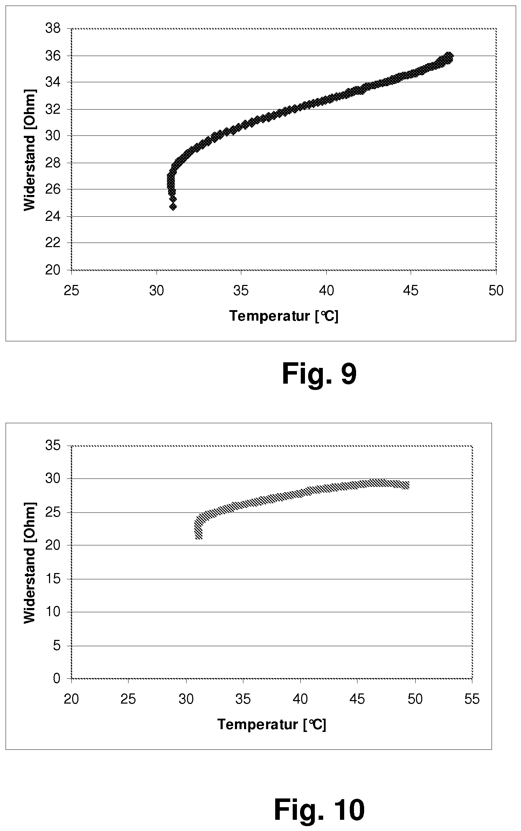

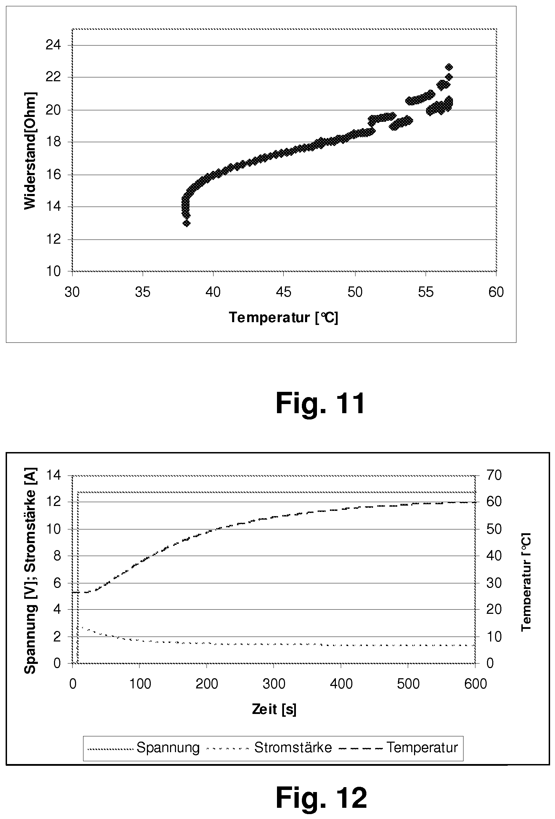

Figur 8 zeigt den Strom, Spannungs und Temperaturverlauf bei Test B für Muster 1, daraus berechnet wurde die Widerstand/Temperatur-Kurve in Figur 9, die den PTC-Effekt dargestellt. Figur 10 zeigt eine solche PTC-Kurve für Muster 2, Figur 11 für Muster 3.

Zum einen wird aus diesen Darstellungen ersichtlich, dass die Flächengebilde gut heizen, zum anderen dass ein klarer PTC-Effekt vorliegt. Dies kann mit unterschiedlichen Füllstoffen erreicht werden.

Zur Ermittlung der Erwärmbarkeit und des PTC-Effekts wurde weiterhin Test C durchgeführt. Hierbei wurden die höher leitfähigen Muster 4, 5 und 6 verwendet, da der Abstand zwischen den Leiterbahnen 1.5 mm betrug.

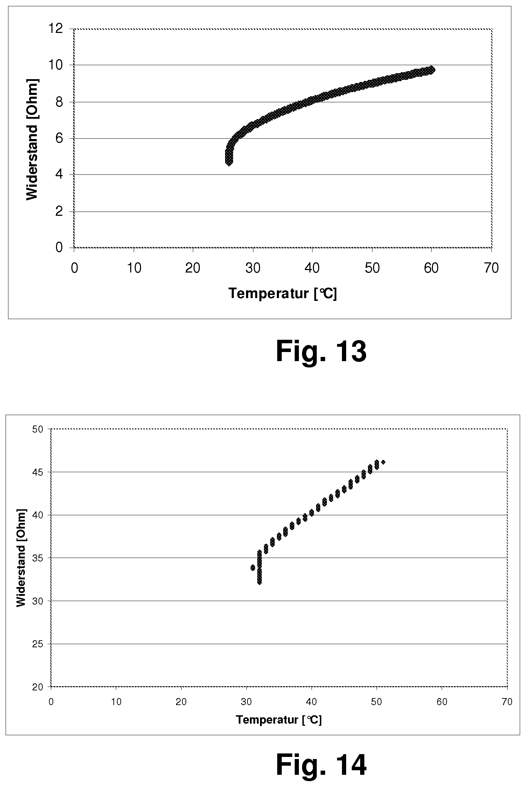

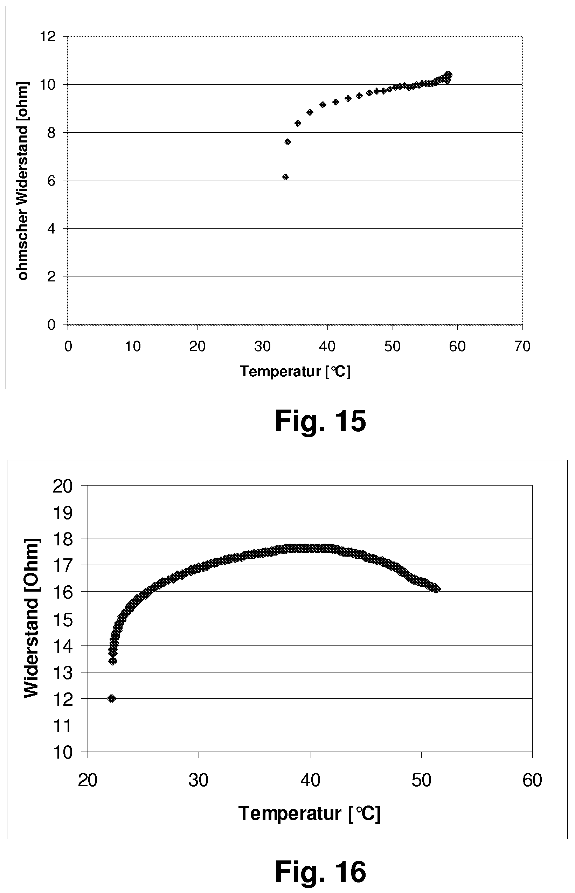

Figur 12 zeigt den Strom, Spannungs und Temperaturverlauf bei Test C für Muster 4, daraus berechnet wurde die Widerstand/Temperatur-Kurve in Figur 13, die den PTC-Effekt dargestellt. Figur 14 zeigt eine solche PTC-Kurve für Muster 5 und Figur 15 für Muster 6.

Zum einen wird aus diesen Darstellungen ersichtlich, dass die Flächengebilde auch in dieser Kontaktierungsart gut heizen, zum anderen dass auch hier ein klarer PTC-Effekt vorliegt. Dies kann mit unterschiedlichen Füllstoffen erreicht werden. Über die Comonomerzusammensetzung kann ebenfalls steuernd eingegriffen werden.

Als weiteres Vergleichsbeispiel wurde eine Haftklebemasse mit PTC-Effekt mittels Test B untersucht (Muster 9). Solche Haftklebemassen sind in WO 2004/081136 A1 beschrieben. Die Untersuchung zeigt, dass der PTC-Effekt, der im Temperaturbereich von 22 bis etwa 40 °C festzustellen ist, sehr viel weniger deutlich ausfällt, als der bei den erfindungsgemäßen Beispielen. Darüber hinaus zeigt die erwärmbare Haftklebemasse oberhalb von 40 °C einen NTC-Effekt (Negative-Temperature-Coefficient), welcher in vielen Anwendungen nachteilig ist. Durch die Vernetzung tritt kein Schmelzen der Haftklebemasse auf.

Der Fachmann hätte erwartet, dass Heißschmelzklebemassen für die Anwendung zur Verklebung im Automobilbereich mindestens dann nicht geeignet sind, wenn die Klebemasse als (elektrisch) erwärmbare Klebemasse ausgeführt wäre und diese Klebemasse zur Beheizung von mit derartigen Flächengebilden verklebten Substraten verwendet werden sollte. Auf die Vorteile, die sich aus einer Verklebung mit Heißschmelzklebemassen ergeben, hätte der Fachmann diesbezüglich also verzichten müssen.

Durch die Implementierung des PTC-Effektes ist es gelungen, Heißschmelzklebemassen anzubieten, die in sofern selbstregulierend sind, als dass sie dem Wärmeerzeugenden Moment (hier dem elektrischen Strom) bei Erreichen hoher Werte einen Widerstand entgegensetzen. Somit kann erreicht werden, dass es systembedingt eine Höchsttemperatur gibt, die die Temperatur bei dem Erwärmvorgang nicht übersteigen kann. Es kann somit vermieden werden, dass die Heißschmelzklebemassen durch die Erwärmung in den Temperaturbereich der Schmelz- bzw. Erweichungstemperatur kommen, wobei die Verklebung Gefahr liefe, sich wesentlich zu verschlechtern oder sich gar ganz zu lösen.

Zwar war aus dem Stand der Technik die Anwendung der PTC-Temperatur in Haftklebemassen bekannt, aber für Haftklebemasse war das Problem des Schmelzens bei "Überhitzung" nicht relevant. Für Heißschmelzmassen stellt sich also eine gänzlich andere Aufgabe bezüglich des Eigenschaftenprofils und der Anforderungen. Weiterhin konnte eine überraschend hohe Eignung der Heißschmelzklebemassen für den PTC-Effekt festgestellt werden, die sich aus dem Verhalten bei Haftklebemassen nicht herleiten ließ.

### Figuren:

- Figur 1:: Kontaktierung über AI-Folie
- Figur 2:: Kontaktierung über AI-Folie und Metallnetz
- Figur 3:: Kontaktierung über metallisierte Folie
- Figur 4:: Ganzflächig kontaktierte Heißschmelzklebemasse: (a) Querschnitt, (b) Aufsicht
- Figur 5:: Einseitig mit einer Kammstruktur kontaktierte Klebemasse: (a) Querschnitt, (b) Aufsicht
- Figur 6:: erfindungsgemäßes mehrschichtiges Flächengebilde
- Figur 7:: erfindungsgemäßes Flächengebilde mit zweilagigem Aufbau der erwärmbaren Heißschmelzklebemasse und flächiger Kontaktierung
- Figur 8:: Spannungs-, Strom- und Temperaturverlauf für Beispiel 1 in Test B
- Figur 9:: PTC-Effekt für Beispiel 1 in Test B
- Figur 10:: PTC-Effekt für Beispiel 2 in Test B
- Figur 11:: PTC-Effekt für Beispiel 3 in Test B
- Figur 12:: Spannungs-, Strom- und Temperaturverlauf für Beispiel 4 in Test C
- Figur 13:: PTC-Effekt für Beispiel 4 in Test C
- Figur 14:: PTC-Effekt für Beispiel 5 in Test C
- Figur 15:: PTC-Effekt für Beispiel 6 in Test C
- Figur 16:: PTC-Effekt für Beispiel 9 in Test B
- Figur 17:: erfindungsgemäßes mehrschichtiges Flächengebilde mit Haftklebemasseschicht
- Figur 18:: erfindungsgemäßes mehrschichtiges Flächengebilde mit Haftklebemasseschicht und Trägermaterial
- Figur 19:: erfindungsgemäßes mehrschichtiges Flächengebilde mit Haftklebemasseschicht und Abdeckmaterial

### Bezugszeichen

- 10: Heißschmelzklebemasse
- 12: Metallfolie
- 14: Metallnetz
- 16: Trägermaterial (z.B. Kunststofffolie)
- 18: Metallschicht
- 20: Elektrodenstruktur
- 22: Haftklebemasse
- 24: Abdeckmaterial (z.B. trennbeschichtetes Trägermaterial)

## Patentansprüche

1. Flächengebilde aufweisend zumindest eine Schicht einer Klebemasse, innerhalb derer Wärme erzeugt werden kann, wobei die Schicht einen Haftgrund kontaktiert, **dadurch gekennzeichnet, dass**
die Klebemasse eine Heißschmelzklebemasse und ein Kaltleiter ist, wobei das Flächengebilde heißschmelzklebrig ist, indem nach der schmelzeförmigen Applikation auf den Haftgrund und anschließendem Abkühlen die Klebkraft bei Raumtemperatur nach ASTM D 3330-04, bei einer Abzugsgeschwindigkeit von 300 mm/min auf dem zu verklebenden Haftgrund größer als 1 N/cm ist.

2. Flächengebilde nach Anspruch 1, **dadurch gekennzeichnet, dass**
die Erzeugung der Wärme durch elektrischen Stromfluss hervorgerufen wird.

3. Flächengebilde nach zumindest einem der vorangehenden Ansprüche, **dadurch gekennzeichnet, dass**
die zumindest eine Schicht der Heißschmelzklebemasse
(a) mindestens eine Klebstoffkomponente und
(b) mindestens ein elektrisch leitfähiges Material
umfasst.

4. Flächengebilde nach Anspruch 3, **dadurch gekennzeichnet, dass**
das elektrisch leitfähige Material Graphit und/oder Ruß, insbesondere Leitruß, ist.

5. Flächengebilde nach zumindest einem der Ansprüche 3 oder 4, **dadurch gekennzeichnet, dass**
das mindestens eine elektrisch leitfähige Material einen Masseanteil von 2 bis 60 Gew.-%, insbesondere von 5 bis 50 Gew.-%, bezogen auf die Heißschmelzklebemasse, aufweist.

6. Flächengebilde nach zumindest einem der Ansprüche 3 bis 5, **dadurch gekennzeichnet, dass**
das elektrisch leitfähige Material in mindestens einer Raumrichtung eine Ausdehnung von nicht mehr als 500 nm, bevorzugt nicht mehr als 200 nm, besonders bevorzugt von nicht mehr als 50 nm aufweist.

7. Flächengebilde nach Anspruch 6, **dadurch gekennzeichnet, dass**
als elektrisch leitfähiges Material Kohlenstoff-Nanoröhren (Carbon Nanotubes) und/oder Kohlenstoff-Nanofasern (Carbon Nanofibers) eingesetzt werden.

8. Flächengebilde nach zumindest einem der vorangehenden Ansprüche, **dadurch gekennzeichnet, dass**
die Heißschmelzklebemasse eine solche auf Basis teilkristalliner Polymere ist oder der Klebstoffkomponente teilkristalline Polymere zugesetzt sind.

9. Flächengebilde nach Anspruch 8, **dadurch gekennzeichnet, dass**
die Heißschmelzklebemasse mindestens 30 Gew.-% teilkristalline Polymere, besser mindestens 50 Gew.-% teilkristalline Polymere, noch besser 100 Gew-.% teilkristalline Polymere enthält.

10. Flächengebilde nach Anspruch 9, **dadurch gekennzeichnet, dass** es sich bei den teilkristallinen Polymeren um Polyolefine, Copolymere von Polyolefinen, lonomere, Polyamide und/oder Copolymere von Polyamiden handelt.

11. Flächengebilde nach zumindest einem der vorangehenden Ansprüche, **gekennzeichnet durch**
zumindest eine elektrisch leitende Kontaktierung, wobei die Kontaktierung insbesondere durch eine Metallfolie, ein Metallnetz, eine metallisierte Kunststofffolie und/oder eine Metallisierung der Oberfläche der Heißschmelzklebemasse bewirkt wird.

12. Flächengebilde nach zumindest einem der vorangehenden Ansprüche, **dadurch gekennzeichnet, dass** die zumindest eine Schicht der Heißschmelzklebemasse mindestens einen Füllstoff mit hoher Wärmekapazität aufweist, insbesondere gewählt aus der Gruppe Aluminium, Beryllium, Bor, Calcium, Eisen, Graphit, Kalium, Kupfer, Magnesium, Phosphor oder Verbindungen der vorgenannten Stoffe, insbesondere Aluminiumoxid und -chlorid, Calciumcarbonat, Calciumclorid, Kupfersulfat, Magnetit, Haematit, Magnesiumcarbonat und -clorid, Phosphorchlorid, Phosphoroxid.

13. Flächengebilde nach zumindest einem der vorangehenden Ansprüche, **gekennzeichnet durch**
zumindest eine zweite Schicht einer Heißschmelzklebemasse.

14. Flächengebilde nach zumindest einem der vorangehenden Ansprüche, **gekennzeichnet durch**
zumindest eine weitere Schicht bestehend aus einer Haftklebemasse, bevorzugt eine Haftklebemasse mit einer Wärmeleitfähigkeit von mindestens 0,5 W/m•K, bevorzugt von mindestens 1 W/m•K.

15. Flächengebilde nach Anspruch 14, **dadurch gekennzeichnet, dass**
die Haftklebemasse eine solche auf Basis von Acrylsäure und/oder Methacrylsäure und/oder auf Basis von Estern der vorgenannten Verbindungen oder eine solche auf Basis von hydriertem Natur- oder Synthesekautschuk ist.

16. Flächengebilde nach einem der Ansprüche 14 oder 15, **gekennzeichnet durch**
zumindest ein Abdeckmaterial, insbesondere ein Trennpapier oder eine von der Haftklebemasse abziehbare Kunststofffolie, ganz besonders ein Abdeckmaterial mit einer Wärmeleitfähigkeit von mindestens 0,5 W/m•K, bevorzugt von mindestens 1 W/m•K.

17. Flächengebilde nach zumindest einem der vorangehenden Ansprüche, **gekennzeichnet durch**
zumindest ein Trägermaterial, insbesondere eine Kunststofffolie, ganz besonders ein Trägermaterial mit einer Wärmeleitfähigkeit von mindestens 0,5 W/m•K, bevorzugt von mindestens 1 W/m•K.

18. Flächengebilde nach zumindest einem der vorangehenden Ansprüche, **dadurch gekennzeichnet, dass**
das erwärmbare Flächengebilde mit einem Mechanismus ausgestattet, der bei erstmaliger Erwärmung des Flächengebildes zu einer Kohäsionserhöhung der heißschmelzklebrigen erwärmbaren Schicht und/oder einer weiteren Heißschmelzkleber- bzw. Haftkleberschicht führt.

19. Verwendung eines Flächengebildes nach einem der Ansprüche 1 bis 18 zur Verklebung von Substraten in der Automobilindustrie.

20. Verwendung eines Flächengebildes nach zumindest einem der Ansprüche 1 bis 18 zur Beheizung von mit derartigen Flächengebilden verklebten Substraten, insbesondere in der Automobilindustrie.

21. Verwendung nach Anspruch 20, **dadurch gekennzeichnet, dass**
die Beheizung des Substrates durch Erwärmung des Flächengebildes hervorgerufen wird, wobei das Flächengebilde auf einen Untergrund appliziert ist, der mit mindestens einem elektrischen Kontakt ausgerüstet ist, wobei insbesondere der Untergrund eines der verklebten Substrate selbst ist.

## Claims

1. Planar structure comprising at least one layer of an adhesive within which heat can be generated, the layer contacting an adhesion base, **characterized in that** the adhesive is a hotmelt adhesive and a posistor, the planar structure being hotmelt-adhesive in the sense that, after application in melt form to the adhesion base, and subsequent cooling, the bond strength at room temperature in accordance with ASTM D 3330-04, at a peel speed of 300 mm/min on the adhesion base to which bonding is to take place, is greater than 1 N/cm.

2. Planar structure according to Claim 1, **characterized in that** the generation of the heat is induced by electrical current flow.

3. Planar structure according to at least one of the preceding claims, **characterized in that** the at least one layer of the hotmelt adhesive comprises
(a) at least one adhesive component and
(b) at least one electrically conductive material.

4. Planar structure according to Claim 3, **characterized in that** the electrically conductive material is graphite and/or carbon black, especially conductive carbon black.

5. Planar structure according to at least one of Claims 3 or 4, **characterized in that** the at least one electrically conductive material has a mass fraction of 2% to 60% by weight, especially of 5% to 50% by weight, based on the hotmelt adhesive.

6. Planar structure according to at least one of Claims 3 to 5, **characterized in that** the electrically conductive material has an extent in at least one spatial direction of not more than 500 nm, preferably not more than 200 nm, more preferably not more than 50 nm.

7. Planar structure according to Claim 6, **characterized in that** carbon nanotubes and/or carbon nanofibers are used as electrically conductive material.

8. Planar structure according to at least one of the preceding claims, **characterized in that** the hotmelt adhesive is one based on partially crystalline polymers, or partially crystalline polymers have been added to the adhesive component.

9. Planar structure according to Claim 8, **characterized in that** the hotmelt adhesive contains at least 30% by weight of partially crystalline polymers, better still at least 50% by weight of partially crystalline polymers, even better still 100% by weight of partially crystalline polymers.

10. Planar structure according to Claim 9, **characterized in that** the partially crystalline polymers are polyolefins, copolymers of polyolefins, ionomers, polyamides and/or copolymers of polyamides.

11. Planar structure according to at least one of the preceding claims, **characterized by** at least one electrically conducting contacting means, the contacting means being effectuated especially by a metal foil, a metal mesh, a metalized polymeric film and/or a metallization of the surface of the hotmelt adhesive.

12. Planar structure according to at least one of the preceding claims, **characterized in that** the at least one layer of the hotmelt adhesive comprises at least one filler with a high heat capacity, selected in particular from the group consisting of aluminium, beryllium, boron, calcium, iron, graphite, potassium, copper, magnesium, phosphorus or compounds of the aforementioned substances, especially aluminium oxide and aluminium chloride, calcium carbonate, calcium chloride, copper sulfate, magnetite, hematite, magnesium carbonate and magnesium chloride, phosphorus chloride, and phosphorus oxide.

13. Planar structure according to at least one of the preceding claims, **characterized by** at least one second layer of a hotmelt adhesive.

14. Planar structure according to at least one of the preceding claims, **characterized by** at least one further layer composed of a pressure-sensitive adhesive, preferably a pressure-sensitive adhesive having a thermal conductivity of at least 0.5 W/m·K, preferably of at least 1 W/m·K.

15. Planar structure according to Claim 14, **characterized in that** the pressure-sensitive adhesive is one based on acrylic acid and/or methacrylic acid and/or based on esters of the aforementioned compounds, or one based on hydrogenated natural or synthetic rubber.

16. Planar structure according to either of Claims 14 and 15, **characterized by** at least one liner material, especially a release paper or a polymeric film which can be peeled from the pressure-sensitive adhesive, more particularly a liner material having a thermal conductivity of at least 0.5 W/m·K, preferably of at least 1 W/m·K.

17. Planar structure according to at least one of the preceding claims, **characterized by** at least one backing material, especially a polymeric film, more particularly a backing material having a thermal conductivity of at least 0.5 W/m·K, preferably of at least 1 W/m·K.

18. Planar structure according to at least one of the preceding claims, **characterized in that** the heatable planar structure is equipped with a mechanism which when the planar structure is first heated leads to an increase in the cohesion of the hotmelt-adhesive, heatable layer and/or of a further hotmelt adhesive or pressure-sensitive adhesive layer.

19. Use of a planar structure according to any of Claims 1 to 18 for adhesively bonding substrates in the automobile industry.

20. Use of a planar structure according to at least one of Claims 1 to 18 for heating substrates bonded with such planar structures, especially in the automobile industry.

21. Use according to Claim 20, **characterized in that** the heating of the substrate is induced by heating of the planar structure, the planar structure having been applied to a base surface which is furnished with at least one electrical contact, the base surface being, in particular, one of the bonded substrates itself.

## Revendications

1. Structure plane présentant au moins une couche d'une masse adhésive dans laquelle de la chaleur peut être produite, la couche étant en contact avec une couche de fond, **caractérisée en ce que** la masse adhésive est une masse adhésive thermofusible et un conducteur à froid, la structure plane étant adhésive thermofusible **en ce que**, après l'application sous forme de masse fondue sur la couche de fond et refroidissement consécutif, l'adhésivité à température ambiante selon la norme ASTM D 3330-04 à une vitesse de pelage de 300 mm/min sur la couche de fond de collage est supérieure à 1 N/cm.

2. Structure plane selon la revendication 1, **caractérisée en ce que** la production de chaleur est provoquée par un courant électrique.

3. Structure plane selon au moins l'une quelconque des revendications précédentes, **caractérisée en ce que** ladite au moins une couche de masse adhésive thermofusible comprend
(a) au moins un composant adhésif et
(b) au moins un matériau électriquement conducteur.

4. Structure plane selon la revendication 3, **caractérisée en ce que** le matériau électriquement conducteur est le graphite et/ou la suie, en particulier la suie conductrice.

5. Structure plane selon au moins l'une quelconque des revendications 3 ou 4, **caractérisée en ce que** ledit au moins un matériau électriquement conducteur présente une proportion massique de 2 à 60% en poids, en particulier de 5 à 50% en poids, par rapport à la masse adhésive thermofusible.

6. Structure plane selon au moins l'une quelconque des revendications 3 à 5, **caractérisée en ce que** le matériau électriquement conducteur présente, dans au moins une direction spatiale, une dilatation qui n'est pas supérieure à 500 nm, de préférence pas supérieure à 200 nm, de manière particulièrement préférée pas supérieure à 50 nm.

7. Structure plane selon la revendication 6, **caractérisée en ce que** des nanotubes de carbone (Carbon Nanotubes) et/ou des nanofibres de carbone (Carbon Nanofibers) sont utilisés comme matériau électriquement conducteur.

8. Structure plane selon au moins l'une quelconque des revendications précédentes, **caractérisée en ce que** la masse adhésive thermofusible est une telle masse à base de polymères partiellement cristallins ou le composant adhésif est additionné de polymères cristallins.

9. Structure plane selon la revendication 8, **caractérisée en ce que** la masse adhésive thermofusible contient au moins 30% en poids de polymères cristallins, préférablement au moins 50% en poids de polymères cristallins, plus préférablement 100% en poids de polymères cristallins.

10. Structure plane selon la revendication 9, **caractérisée en ce qu'**il s'agit, pour les polymères partiellement cristallins, de polyoléfines, de copolymères de polyoléfines, d'iononomères, de polyamides et/ou de copolymères de polyamides.

11. Structure plane selon au moins l'une quelconque des revendications précédentes, **caractérisée par**
au moins une mise en contact électriquement conductrice, la mise en contact étant réalisée en particulier par une feuille métallique, un filet métallique, une feuille en matériau synthétique métallisée et/ou une métallisation de la surface de la masse adhésive thermofusible.

12. Structure plane selon au moins l'une quelconque des revendications précédentes, **caractérisée en ce que** ladite au moins une couche de la masse adhésive thermofusible présente au moins une charge dotée d'une capacité thermique élevée, en particulier choisie dans le groupe constitué par l'aluminium, le béryllium, le bore, le calcium, le fer, le graphite, le potassium, le cuivre, le magnésium, le phosphore ou des composés des substances susmentionnées, en particulier l'oxyde d'aluminium, le chlorure d'aluminium, le carbonate de calcium, le chlorure de calcium, le sulfate de cuivre, la magnétite, l'hématite, le carbonate de magnésium, le chlorure de magnésium, le chlorure de phosphore, l'oxyde de phosphore.

13. Structure plane selon au moins l'une quelconque des revendications précédentes, **caractérisée par** au moins une deuxième couche d'une masse adhésive thermofusible.

14. Structure plane selon au moins l'une quelconque des revendications précédentes, **caractérisée par** au moins une autre couche, constituée par une masse autoadhésive, de préférence une masse autoadhésive présentant une conductibilité thermique d'au moins 0,5 W/m ^{∗} K, de préférence d'au moins 1 W/m ^{∗}K.

15. Structure plane selon la revendication 14, **caractérisée en ce que** la masse autoadhésive est une telle masse à base d'acide acrylique et/ou d'acide méthacrylique et/ou à base d'esters des composés susmentionnés ou une telle masse à base de caoutchouc naturel ou de synthèse hydrogéné.

16. Structure plane selon l'une quelconque des revendications 14 ou 15, **caractérisée par** au moins un matériau de recouvrement, en particulier un papier de séparation ou une feuille en matériau synthétique pouvant être pelée de la masse autoadhésive, tout particulièrement un matériau de recouvrement présentant une conductibilité thermique d'au moins 0,5 W/m ^{∗} K, de préférence d'au moins 1 W/m ^{∗} K.

17. Structure plane selon au moins l'une quelconque des revendications précédentes, **caractérisée par** au moins un matériau support, en particulier une feuille en matériau synthétique, tout particulièrement un matériau support présentant une conductibilité thermique d'au moins 0,5 W/m ^{∗} K, de préférence d'au moins 1 W/m ^{∗} K.

18. Structure plane selon au moins l'une quelconque des revendications précédentes, **caractérisée en ce que** la structure plane pouvant être chauffée est pourvue d'un mécanisme qui provoque, lors du premier chauffage de la structure plane, une augmentation de la cohésion de la couche adhésive thermofusible pouvant être chauffée et/ou d'une autre couche adhésive thermofusible ou couche autoadhésive.

19. Utilisation d'une structure plane selon l'une quelconque des revendications 1 à 18 pour le collage de substrats dans l'industrie automobile.

20. Utilisation d'une structure plane selon au moins l'une quelconque des revendications 1 à 18 pour le chauffage de substrats collés par de telles structures planes, en particulier dans l'industrie automobile.

21. Utilisation selon la revendication 20, **caractérisée en ce que** le chauffage du substrat est provoqué par chauffage de la structure plane, la structure plane étant appliquée sur une sous-couche qui est pourvue d'au moins un contact électrique, la sous-couche étant en particulier l'un des substrats collés eux-mêmes.
